# EUROPEAN PATENT SPECIFICATION

(11) **EP 4 580 031 B1**
(45) Date of publication and mention of the grant of the patent: **30.09.2026**
(21) Application number: 24222736.1
(22) Date of filing: 23.12.2024
(51) Int. Cl.: H02M 7/48, H02M 7/483, H02M 7/5387

(54) **INVERTER AND VOLTAGE CONTROL METHOD THEREOF**
WECHSELRICHTER UND SPANNUNGSSTEUERUNGSVERFAHREN DAFÜR
ONDULEUR ET SON PROCÉDÉ DE COMMANDE DE TENSION

(30) Priority: 28.12.2023 CN 202311861805
(43) Date of publication of application: 02.07.2025
(73) Proprietor: Huawei Digital Power Technologies Co., Ltd., Shenzhen, Guangdong 518043 (CN)
(72) Inventor: ZHANG, Fenggang, Shenzhen, 518043 (CN); CHEN, Aitang, Shenzhen, 518043 (CN); AI, Haotian, Shenzhen, 518043 (CN)
(74) Representative: Gill Jennings & Every LLP

(56) References cited:
- EP-A1- 4 432 545
- CN-A- 115 589 169
- CN-A- 116 232 102
- HE GUOFENG ET AL: "A Novel Control Strategy of Suppressing DC Current Injection to the Grid for Single-Phase PV Inverter", IEEE TRANSACTIONS ON POWER ELECTRONICS, INSTITUTE OF ELECTRICAL AND ELECTRONICS ENGINEERS, USA, vol. 30, no. 3, 1 March 2015 (2015-03-01), pages 1266 - 1274, XP011561472, ISSN: 0885-8993, [retrieved on 20141014], DOI: 10.1109/TPEL.2014.2317288

## Description

### TECHNICAL FIELD

This application relates to the field of power electronics technologies, and in particular, to an inverter and a voltage control method thereof.

### BACKGROUND

An inverter is a converter for converting a direct current (direct current, DC) into an alternating current (alternating current, AC).

The inverter is usually connected to a photovoltaic panel and a load, and is configured to: convert a direct current DC from the photovoltaic panel into an alternating current AC, and then transmit the alternating current AC to the load, to supply power to the load. The inverter usually includes two capacitors and a switching bridge arm. The two capacitors are connected in series between a positive bus and a negative bus (that is, positive and negative buses), and a series connection node of the two capacitors is also referred to as a bus midpoint. The switching bridge arm is connected to the positive bus and the negative bus, the switching bridge arm has a plurality of outputs, and each output and the bus midpoint form one pair of output ports. The inverter is connected to the load through a plurality of pairs of output ports.

In an ideal state, a voltage difference between the positive and negative buses is small, in other words, voltages on the positive and negative buses are balanced. However, during actual application, due to load imbalance across the plurality of pairs of output ports, generated unbalanced currents flow into the bus midpoint, and consequently the voltages on the positive and negative buses are unbalanced. CN 115589169 A discloses an inverter system based on instantaneous characteristics to improve balancing efficiency.

### SUMMARY

This application provides an inverter and a voltage control method thereof, to resolve a technical problem of voltage imbalance between positive and negative buses in a related technology.

According to a first aspect, an inverter is provided in accordance with claim 1. The inverter has a plurality of pairs of output ports, and the inverter includes a balancing bridge arm, a switching bridge arm, two capacitors, a first inductor, and a control circuit. The two capacitors are connected in series between a positive bus and a negative bus, a series connection node between the two capacitors is a bus midpoint, and the positive bus and the negative bus are configured to connect to a direct current power supply device. The balancing bridge arm is connected to the positive bus and the negative bus, and is connected to the bus midpoint through the first inductor. The switching bridge arm is connected to the positive bus and the negative bus, the switching bridge arm has a plurality of outputs, and each of the plurality of outputs and the bus midpoint form one pair of output ports. The control circuit is configured to: obtain a direct current voltage (direct current voltage, DCV) component of a target output port in the plurality of pairs of output ports, and a bus voltage difference between the positive bus and the negative bus; and when the bus voltage difference is greater than or equal to a first voltage threshold and less than or equal to a second voltage threshold, output a first balancing modulation signal to the balancing bridge arm, where the first balancing modulation signal is used to control the balancing bridge arm to adjust a current flowing through the first inductor, to reduce the DCV component of the target output port to a target range.

That is, the control circuit may control the balancing bridge arm to adjust the DCV component of the target output port. The target output port is connected to the bus midpoint. Therefore, the control circuit controls the balancing bridge arm to adjust the DCV component of the target output port, so that a voltage of the bus midpoint can be adjusted. In addition, the DCV component of the target output port is reduced to the target range, so that the bus voltage difference can be less than the first voltage threshold. In other words, the bus voltage difference can be reduced, so that voltages on positive and negative buses are balanced.

The control circuit is further configured to: when the bus voltage difference is greater than or equal to a third voltage threshold, output a second balancing modulation signal to the balancing bridge arm, where the second balancing modulation signal is used to control the balancing bridge arm to adjust the current flowing through the first inductor, to reduce the bus voltage difference, where the third voltage threshold is greater than the second voltage threshold.

In other words, when the bus voltage difference is larger, the control circuit can further output the second balancing modulation signal to the balancing bridge arm, to directly reduce the bus voltage difference, so that the voltages on the positive and negative buses are balanced. Then, if the bus voltage difference is still greater than or equal to the first voltage threshold and less than or equal to the second voltage threshold, the control circuit can further control the balancing bridge arm to adjust the DCV component of the target output port, to further reduce the bus voltage difference, so that the voltages on the positive and negative buses are more balanced. In this way, it can be ensured that precision of adjusting the bus voltage difference is better, and adjustment efficiency is high.

The control circuit is further configured to: when the bus voltage difference increases from being less than or equal to the second voltage threshold to being greater than the second voltage threshold and less than the third voltage threshold, output the first balancing modulation signal to the balancing bridge arm; and when the bus voltage difference decreases from being greater than or equal to the third voltage threshold to being less than the third voltage threshold and greater than the second voltage threshold, output the second balancing modulation signal to the balancing bridge arm.

In other words, after the control circuit outputs the first balancing modulation signal to the balancing bridge arm, if the bus voltage difference changes again to be greater than the second voltage threshold and less than the third voltage threshold, the control circuit may continue to output the first balancing modulation signal to the balancing bridge arm to balance the voltages on the positive and negative buses. After the control circuit outputs the second balancing modulation signal to the balancing bridge arm, if the bus voltage difference changes again to be greater than the second voltage threshold and less than the third voltage threshold, the control circuit may continue to output the second balancing modulation signal to the balancing bridge arm to balance the voltages on the positive and negative buses.

Optionally, the balancing bridge arm may include two first switching transistors. The two first switching transistors may be connected in series between the positive bus and the negative bus, and a series connection node of the two first switching transistors may be connected to the first inductor.

It can be learned that the first balancing modulation signal may be used to control turn-on and turn-off of the two first switching transistors, to adjust a current output to the first inductor, and therefore adjust the DCV component of the target output port or the bus voltage difference to balance the voltages on the positive and negative buses.

Optionally, the switching bridge arm may have two outputs. Correspondingly, the inverter may have two pairs of output ports, that is, the inverter may be a single-phase inverter. The switching bridge arm may include two second switching transistors, two third switching transistors, and two fourth switching transistors. The two second switching transistors may be connected in series between the positive bus and the negative bus, and a series connection node of the two second switching transistors may correspond to one of the two outputs. The two third switching transistors may be connected in series between the positive bus and the negative bus, and a series connection node of the two third switching transistors may correspond to the other one of the two outputs. The two fourth switching transistors may be connected in series between the two outputs.

Optionally, the control circuit may include a first sampling circuit and a second sampling circuit. The first sampling circuit may be connected to the positive bus, the negative bus, and the control circuit. The second sampling circuit may be connected to the target output port and the control circuit. The first sampling circuit may be configured to collect the bus voltage difference. The second sampling circuit may be configured to collect the DCV component of the target output port. The control circuit may be configured to: obtain the bus voltage difference through the first sampling circuit, and obtain the DCV component of the target output port through the second sampling circuit.

Optionally, the first sampling circuit and the second sampling circuit each may include at least one sampling resistor.

Optionally, the inverter may further include a plurality of second inductors that are in one-to-one correspondence with the plurality of outputs of the switching bridge arm. Each of the plurality of second inductors may be connected to one corresponding output. The second inductors and the first inductor may be all coupling inductors.

Because the bus voltage difference and the DCV component of the target output port may be adjusted by the control circuit by outputting balancing modulation signals to the balancing bridge arm, selection of an inductor in the inverter can be more flexible. For example, in terms of a hardware structure, a coupling inductor may be used instead of a discrete inductor with high costs, so that hardware costs can be reduced.

According to a second aspect, a voltage control method for an inverter is provided in accordance with claim 7. The inverter has a plurality of pairs of output ports, and the inverter includes a balancing bridge arm, a switching bridge arm, two capacitors, and a first inductor. The two capacitors are connected in series between a positive bus and a negative bus, a series connection node between the two capacitors is a bus midpoint, and the positive bus and the negative bus are configured to connect to a direct current power supply device. The balancing bridge arm is connected to the positive bus and the negative bus, and is connected to the bus midpoint through the first inductor. The switching bridge arm is connected to the positive bus and the negative bus, the switching bridge arm has a plurality of outputs, and each of the plurality of outputs and the bus midpoint form one pair of output ports. The method includes: obtaining a direct current voltage DCV component of a target output port in the plurality of pairs of output ports of the inverter, and a bus voltage difference between the positive bus and the negative bus; and when the bus voltage difference is greater than or equal to a first voltage threshold and less than or equal to a second voltage threshold, outputting a first balancing modulation signal to the balancing bridge arm, where the first balancing modulation signal is used to control the balancing bridge arm to adjust a current flowing through the first inductor, to reduce the DCV component of the target output port to a target range.

The method further includes: when the bus voltage difference is greater than or equal to a third voltage threshold, outputting a second balancing modulation signal to the balancing bridge arm, where the second balancing modulation signal is used to control the balancing bridge arm to adjust the current flowing through the first inductor, to reduce the bus voltage difference; and the third voltage threshold is greater than the second voltage threshold.

The method further includes: when the bus voltage difference increases from being less than or equal to the second voltage threshold to being greater than the second voltage threshold and less than the third voltage threshold, outputting the first balancing modulation signal to the balancing bridge arm; and when the bus voltage difference decreases from being greater than or equal to the third voltage threshold to being less than the third voltage threshold and greater than the second voltage threshold, outputting the second balancing modulation signal to the balancing bridge arm.

In conclusion, this application provides an inverter and a voltage control method thereof. The inverter has a plurality of pairs of output ports, and the inverter includes a balancing bridge arm, a switching bridge arm, two capacitors, a first inductor, and a control circuit. The two capacitors are connected in series between positive and negative buses, and each pair of output ports is connected to a series connection node (namely, a bus midpoint) of the two capacitors. The control circuit can obtain a DCV component of a target output port in a plurality of pairs of output ports and a bus voltage difference between the positive and negative buses; and when the bus voltage difference is greater than or equal to a first voltage threshold and less than or equal to a second voltage threshold, can output a balancing modulation signal to the balancing bridge arm, to control the balancing bridge arm to reduce the DCV component of the target output port to a target range by adjusting a current flowing through the first inductor, so that the bus voltage difference is reduced to be less than the first voltage threshold. In other words, the bus voltage difference can be reduced, so that voltages on the positive and negative buses can be balanced.

### BRIEF DESCRIPTION OF DRAWINGS

FIG. 1 is a diagram of a structure of a power supply system according to an embodiment of this application;
FIG. 2 is a schematic of a structure of an inverter according to an embodiment of this application;
FIG. 3 is a diagram of a working procedure of a control circuit in an inverter according to an embodiment of this application;
FIG. 4 is a schematic of a structure of another inverter according to an embodiment of this application;
FIG. 5 is a schematic flowchart of a voltage control method for an inverter according to an embodiment of this application; and
FIG. 6 is a schematic flowchart of another voltage control method for an inverter according to an embodiment of this application.

### DESCRIPTION OF EMBODIMENTS

The following describes in detail an inverter and a voltage control method thereof provided in embodiments of this application with reference to accompanying drawings. Key terms in embodiments of this application are first described.

An inverter, also referred to as a power converter, is configured to convert a direct current DC provided by a photovoltaic panel (also referred to as a solar panel) or another direct current power supply (for example, a battery) into an alternating current AC, to supply power to a connected load. The inverter may be, for example, a single-phase hybrid (hybrid) inverter.

A power grid includes substations and power transmission and distribution lines of various voltages in a power system, and is also referred to as a public power grid.

Off-grid operation of an inverter means that when there is no voltage provided by a power grid, the inverter directly supplies a converted alternating current AC to a load, to supply power to the load.

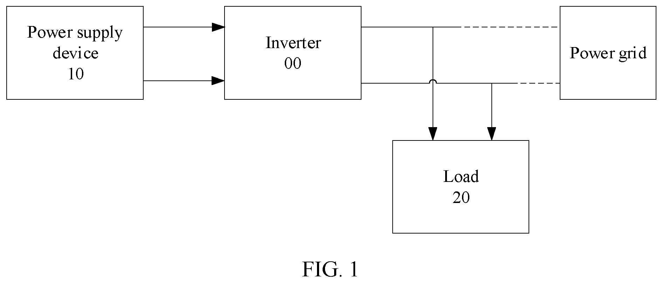

The inverter and the voltage control method thereof provided in embodiments of this application are applied to a power supply system. As shown in FIG. 1, the power supply system includes a power supply device 10 and an inverter 00. Optionally, the inverter 00 may be a single-phase hybrid inverter.

The power supply device 10 is connected to the inverter 00, and the inverter 00 is further configured to connect to a load 20.

In addition, the power supply device 10 is configured to provide a power supply voltage to the inverter 00, and the inverter 00 is configured to supply power to the load 20 based on the power supply voltage.

For example, the power supply device 10 may include a plurality of photovoltaic panels or batteries that are connected in series and in parallel. The power supply voltage provided by the power supply device 10 may be a direct current DC voltage. The inverter 00 may convert the direct current DC voltage into an alternating current AC voltage and transmit the alternating current AC voltage to the load 20, to supply power to the load 20. That is, the power supply device 10 may be a direct current power supply device.

It may be understood that the inverter 00 described in embodiments of this application runs off-grid. In other words, it can be learned with reference to FIG. 1 that the inverter 00 may run independently of a power grid, and does not exchange electric power with the power grid (which is indicated by dashed lines in the figure). Correspondingly, it can also be learned that that the inverter 00 establishes a connection to the power grid to exchange electric power may also be referred to as grid-connected operation of the inverter.

Due to load imbalance caused by the inverter 00, voltages on positive and negative buses of the inverter 00 are unbalanced. An embodiment of this application provides an inverter. The inverter can ensure that a bus voltage difference is small, to better balance voltages on positive and negative buses.

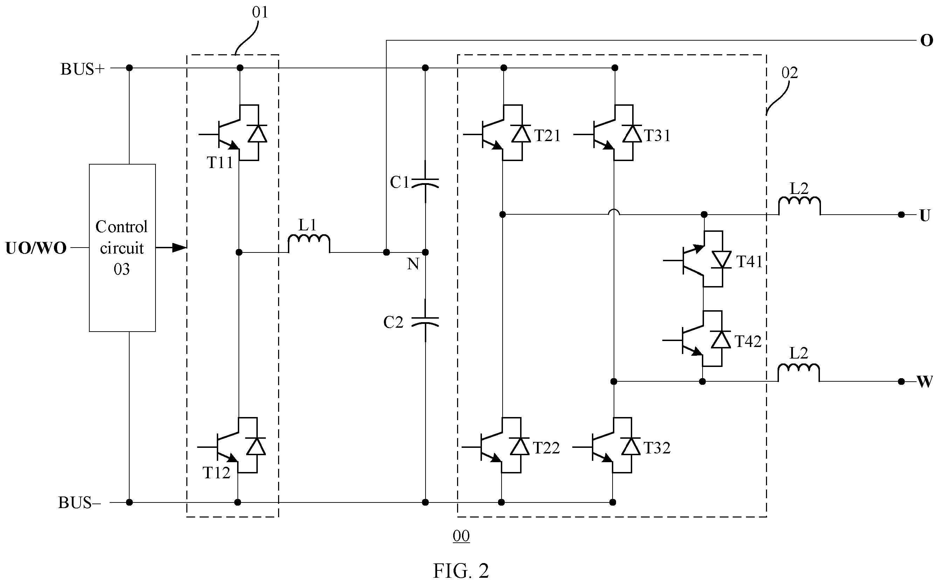

As shown in FIG. 2, the inverter 00 provided in this embodiment of this application has a plurality of pairs of output ports, and the inverter 00 includes a balancing bridge arm 01, a switching bridge arm 02, two capacitors C1 and C2, a first inductor L1, and a control circuit 03.

The two capacitors C1 and C2 are connected in series between a positive bus BUS+ and a negative bus BUS- (that is, the positive and negative buses described above), a series connection node N between the two capacitors C1 and C2 is a bus midpoint, and the positive bus BUS+ and the negative bus BUS- are configured to connect to a direct current power supply device.

The balancing bridge arm 01 is connected to the positive bus BUS+ and the negative bus BUS-, and is connected to the bus midpoint N through the first inductor L1.

The switching bridge arm 02 is connected to the positive bus BUS+ and the negative bus BUS-, the switching bridge arm 02 has a plurality of outputs, and each of the plurality of outputs and the bus midpoint N can form one pair of output ports. Therefore, the plurality of outputs and the bus midpoint N can form the plurality of pairs of output ports.

The control circuit 03 is configured to:
obtain a DCV component of a target output port in the plurality of pairs of output ports, and the bus voltage difference between the positive bus BUS+ and the negative bus BUS-; and
when the bus voltage difference is greater than or equal to a first voltage threshold Z and less than or equal to a second voltage threshold Y, output a first balancing modulation signal to the balancing bridge arm 01.

The first balancing modulation signal is used to control the balancing bridge arm 01 to adjust a current flowing through the first inductor L1, to reduce the DCV component of the target output port to a target range. That is, the first balancing modulation signal may be used to control the balancing bridge arm 01 to adjust the DCV component of the target output port. The target output port is connected to the bus midpoint N. Therefore, the DCV component of the target output port is adjusted, so that the bus voltage difference can be adjusted. In addition, in this embodiment of this application, after the DCV component of the target output port is reduced to the target range, the bus voltage difference can be enabled to be less than the first voltage threshold Z, so that the voltages on the positive and negative buses are balanced.

Optionally, all the first voltage threshold Z, the second voltage threshold Y, and the target range may be prestored in the control circuit 03. In addition, both the first voltage threshold Z and the second voltage threshold Y may be in a unit of volt (V), and a DCV component in the target range may be in a unit of millivolt mV.

It may be understood that, with reference to FIG. 2, the control circuit 03 is connected to the positive bus BUS+, the negative bus BUS-, the balancing bridge arm 01, and the target output port in the plurality of pairs of output ports, to obtain the DCV component of the target output port and the bus voltage difference, and output the first balancing modulation signal to the balancing bridge arm 01 based on the bus voltage difference.

In addition, for example, as shown in FIG. 2, the switching bridge arm 02 in the inverter 00 shown in FIG. 2 has two outputs U and W. One output U and the bus midpoint N can form one pair of output ports UO, and the other output W and the bus midpoint N can form the other pair of output ports WO. That is, the two outputs U and W and the bus midpoint N can form two pairs of output ports UO and WO. A terminal O connected to the bus midpoint N in the two pairs of output ports UO and WO may be obtained through phase splitting of the output U and the output W. Correspondingly, when a DCV component between the output U and the output W is fixed, a DCV component of one output port in the two pairs of output ports UO and WO is adjusted, so that a DCV component of the other output port can be adjusted. Therefore, in this embodiment of this application, the control circuit 03 is connected to one pair of target output ports (for example, the pair of output ports UO or the pair of output ports WO) in the two pairs of output ports UO and WO, and is configured to adjust a DCV component of the pair of target output ports. The inverter of this structure is the single-phase hybrid inverter described above.

Optionally, it can still be learned with reference to FIG. 1 that the balancing bridge arm 01 and the switching bridge arm 02 each may include a plurality of switching transistors. The switching transistor may be, for example, an insulated gate bipolar transistor (insulated gate bipolar transistor, IGBT) or a metal-oxide-semiconductor field-effect transistor (metal-oxide-semiconductor field-effect transistor, MOSFET). A type of the switching transistor is not limited in this embodiment of this application.

It may be understood that, in this embodiment of this application, the first balancing modulation signal output by the control circuit 03 may be used to control turn-on and turn-off of a plurality of switching transistors in the balancing bridge arm 01, to adjust the DCV component of the target output port.

In conclusion, this embodiment of the present disclosure provides the inverter. The inverter has the plurality of pairs of output ports, and the inverter includes the balancing bridge arm, the switching bridge arm, the two capacitors, the first inductor, and the control circuit. The two capacitors are connected in series between the positive and negative buses, and each pair of output ports is connected to the series connection node (namely, the bus midpoint) of the two capacitors. The control circuit can obtain the DCV component of the target output port in the plurality of pairs of output ports and the bus voltage difference between the positive and negative buses; and when the bus voltage difference is greater than or equal to the first voltage threshold and less than or equal to the second voltage threshold, can output a balancing modulation signal to the balancing bridge arm, to control the balancing bridge arm to reduce the DCV component of the target output port to the target range by adjusting the current flowing through the first inductor, so that the bus voltage difference is reduced to be less than the first voltage threshold. In other words, the bus voltage difference can be reduced, so that the voltages on the positive and negative buses can be balanced. In this adjustment manner, the bus voltage difference can be adjusted more precisely.

In accordance with the invention, the control circuit 03 is further configured to:
when the bus voltage difference is greater than or equal to a third voltage threshold X, output a second balancing modulation signal to the balancing bridge arm 01. The second balancing modulation signal is used to control the balancing bridge arm 01 to adjust the current flowing through the first inductor L1, to reduce the bus voltage difference. The bus voltage difference is reduced to be less than the third voltage threshold X.
That is, the second balancing modulation signal is used to control the balancing bridge arm 01 to directly adjust the bus voltage difference. The third voltage threshold X is greater than the second voltage threshold Y.

It may be understood that, same as the first balancing modulation signal, the second balancing modulation signal output by the control circuit 03 may also be used to control turn-on and turn-off of the plurality of switching transistors in the balancing bridge arm 01, to control a voltage of the bus midpoint N. Because the bus midpoint N is actually the series connection node of the two capacitors C1 and C2 that are connected in series between the positive and negative buses, the bus voltage difference can be adjusted.

When the first balancing modulation signal or the second balancing modulation signal is used to control the switching transistor in the balancing bridge arm 01 to be turned on, a current is output to the first inductor L1 to charge the first inductor L1. When the first balancing modulation signal or the second balancing modulation signal is used to control the switching transistor in the balancing bridge arm 01 to be turned off, outputting of the current to the first inductor L1 may be stopped. In this case, the first inductor L1 may discharge. When discharging, the first inductor L1 may adjust the voltage of the bus midpoint N, to adjust the DCV component of the target output port or the bus voltage difference.

Optionally, the third voltage threshold X may also be prestored in the control circuit 03. In addition, the third voltage threshold X may be in a unit of V.

The third voltage threshold X is greater than the second voltage threshold Y, and the second voltage threshold Y is greater than the first voltage threshold Z, and the third voltage threshold X is also greater than the first voltage threshold Z. That is, X>Y>Z. For example, the first voltage threshold Z may be 1 V, the second voltage threshold Y may be 10 V, and the third voltage threshold X may be 30 V.

It can be learned from the foregoing analysis that, in the foregoing optional implementation, after the control circuit 03 controls, by using the second balancing modulation signal, the balancing bridge arm 01 to reduce the bus voltage difference to be less than the third voltage threshold X, if the bus voltage difference is less than or equal to the second voltage threshold Y and greater than or equal to the first voltage threshold Z, the control circuit 03 outputs the first balancing modulation signal to the balancing bridge arm 01, to control the balancing bridge arm 01 to further reduce the bus voltage difference to be less than the first voltage threshold Z. Because the first voltage threshold Z is less than the third voltage threshold X, the voltages on the positive and negative buses can be better balanced.

The control circuit 03 outputs the second balancing modulation signal to the balancing bridge arm 01 to control the balancing bridge arm 01 to directly reduce the bus voltage difference, thereby providing a coarse adjustment manner for balancing the voltages on the positive and negative buses. That the control circuit 03 outputs the first balancing modulation signal to the balancing bridge arm 01 to control the balancing bridge arm 01 to indirectly reduce the bus voltage difference by reducing the DCV component of the target output port is a fine adjustment manner for further balancing the voltages on the positive and negative buses.

In other words, in this embodiment of this application, the control circuit 03 may choose to directly perform fine adjustment by controlling the balancing bridge arm 01 to reduce the DCV component of the target output port, to balance the voltages on the positive and negative buses; and may also choose to first perform coarse adjustment by controlling the balancing bridge arm 01 to directly reduce the bus voltage difference, to roughly balance the voltages on the positive and negative buses, and then perform fine adjustment by controlling the balancing bridge arm 01 to reduce the DCV component of the target output port, to better balance the voltages on the positive and negative buses. That is, the control circuit 03 in this embodiment of this application may choose to perform only fine adjustment, or first perform coarse adjustment and then perform fine adjustment, to reduce the bus voltage difference, so as to balance the voltages on the positive and negative buses.

It can be learned with reference to the foregoing descriptions that, in comparison with some implementations in which the voltages on the positive and negative buses are balanced through only coarse adjustment by directly reducing the bus voltage difference, in this embodiment of this application, in an aspect, the voltages on the positive and negative buses are balanced through fine adjustment by directly reducing the DCV component of the target output port, so that adjustment precision is good, and the voltages on the positive and negative buses can be better balanced. In another aspect, in the implementation in which the voltages on the positive and negative buses are balanced through only coarse adjustment by reducing the bus voltage difference, usually, the voltages on the positive and negative buses can be balanced only after a plurality of times of adjustment are performed. Consequently, an adjustment process is slow, and dynamic response is poor. Therefore, in this embodiment of this application, the control circuit 03 cooperates with the balancing bridge arm 01 to first perform coarse adjustment by reducing the bus voltage difference, to balance the voltages on the positive and negative buses, and further perform fine adjustment by reducing the DCV component of the target output port, to balance the voltages on the positive and negative buses, so that the voltages on the positive and negative buses can be balanced more quickly and reliably. In other words, adjustment precision is good, and adjustment efficiency is high and dynamic response is good.

Further the control circuit 03 is configured to:
when the bus voltage difference increases from being less than or equal to the second voltage threshold Y to being greater than the second voltage threshold Y and less than the third voltage threshold X, output the first balancing modulation signal to the balancing bridge arm 01; and
when the bus voltage difference decreases from being greater than or equal to the third voltage threshold X to being less than the third voltage threshold X and greater than the second voltage threshold Y, output the second balancing modulation signal to the balancing bridge arm 01.

When the bus voltage difference is greater than or equal to the first voltage threshold Z and less than or equal to the second voltage threshold Y, the control circuit 03 outputs the first balancing modulation signal to the balancing bridge arm 01, to balance the voltages on the positive and negative buses. Therefore, that the bus voltage difference increases from being less than or equal to the second voltage threshold Y to being greater than the second voltage threshold Y and less than the third voltage threshold X means that after the control circuit 03 outputs the first balancing modulation signal to the balancing bridge arm 01, the bus voltage difference changes to be greater than the second voltage threshold Y and less than the third voltage threshold X. This case occurs mainly because of an additional load. In this case, the control circuit 03 is configured to continue to output the first balancing modulation signal to the balancing bridge arm 01, to balance the voltages on the positive and negative buses.

Similarly, when the bus voltage difference is greater than or equal to the third voltage threshold X, the control circuit 03 outputs the second balancing modulation signal to the balancing bridge arm 01, to balance the voltages on the positive and negative buses. Therefore, that the bus voltage difference decreases from being greater than or equal to the third voltage threshold X to being less than the third voltage threshold X and greater than the second voltage threshold Y means that after the control circuit 03 outputs the second balancing modulation signal to the balancing bridge arm 01, the bus voltage difference changes to be greater than the second voltage threshold Y and less than the third voltage threshold X. In this case, the control circuit 03 is configured to continue to output the second balancing modulation signal to the balancing bridge arm 01, to balance the voltages on the positive and negative buses.

In other words, in accordance with the invention, when the bus voltage difference is greater than the second voltage threshold Y and less than the third voltage threshold X, the control circuit 03 outputs, to the balancing bridge arm 01, a balancing modulation signal output to the balancing bridge arm 01 before the bus voltage difference changes to be greater than the second voltage threshold Y and less than the third voltage threshold X. The balancing modulation signal may be the first balancing modulation signal or the second balancing modulation signal. Certainly, if the bus voltage difference is greater than the second voltage threshold Y and less than the third voltage threshold X when the control circuit 03 detects the bus voltage difference for the first time, the control circuit 03 may be configured to output either of the first balancing modulation signal and the second balancing modulation signal to the balancing bridge arm 01.

For example, for an implementation in which the bus voltage difference is greater than the second voltage threshold Y and less than the third voltage threshold X, in this embodiment of this application, the control circuit 03 may be further configured to:
when the bus voltage difference is greater than or equal to the first voltage threshold Z and less than or equal to the second voltage threshold Y, set a control mode flag to a first mode flag A, where the first mode flag A may correspond to the first balancing modulation signal;
set the control mode flag to a second mode flag B based on a fact that the bus voltage difference is greater than or equal to the third voltage threshold X, where the second mode flag B may correspond to the second balancing modulation signal; and
output a balancing modulation signal corresponding to the control mode flag to the balancing bridge arm 01 based on a fact that the bus voltage difference is greater than the second voltage threshold Y and less than the third voltage threshold X.

In other words, the control circuit 03 may preset the control mode flag based on the bus voltage difference, so that when the bus voltage difference is between the second voltage threshold Y and the third voltage threshold X, the corresponding balancing modulation signal is directly output to the balancing bridge arm 01, to quickly balance the voltages on the positive and negative buses.

Optionally, in this embodiment of this application, the control mode flag may further include an initial mode flag C. The control circuit 03 may be configured to adjust the initial mode flag C to the first mode flag A or the second mode flag B based on the bus voltage difference.

Optionally, the control mode flag may be identified in a binary form. For example, the initial mode flag C may be 00, the first mode flag A may be 10, and the second mode flag B may be 01.

Optionally, in this embodiment of this application, the control circuit 03 may prestore processing logic of the first mode flag A and processing logic of the second mode flag B, and the two mode flags have different processing logic. The control circuit 03 may correspondingly output the first balancing modulation signal to the balancing bridge arm 01 by executing the processing logic of the first mode flag A, and may correspondingly output the second balancing modulation signal to the balancing bridge arm 01 by executing the processing logic of the second mode flag B. In addition, when the bus voltage difference is between the third voltage threshold X and the second voltage threshold Y, the control circuit 03 may directly execute processing logic of the current control mode flag to output the corresponding balancing modulation signal to the balancing bridge arm 01.

For example, when the bus voltage difference is between the third voltage threshold X and the second voltage threshold Y, if the current control mode flag is the first mode flag A, the control circuit 03 may output the corresponding first balancing modulation signal to the balancing bridge arm 01, to control the balancing bridge arm 01 to adjust the DCV component of the target output port. If the current control mode flag is the second mode flag B, the control circuit 03 may output the corresponding second balancing modulation signal to the balancing bridge arm 01, to control the balancing bridge arm 01 to adjust the bus voltage difference.

Optionally, in this embodiment of this application, the first balancing modulation signal may be a pulse width modulation (pulse width modulation, PWM) driver gating signal. The second balancing modulation signal may also be a PWM driver gating signal. Outputting of the first balancing modulation signal and the second balancing modulation signal by the control circuit 03 may also be referred to as sending of PWM driver gating signals.

In addition, it may be understood that the first balancing modulation signal and the second balancing modulation signal may be different. For example, both the first balancing modulation signal and the second balancing modulation signal are PWM driver gating signals. That the first balancing modulation signal and the second balancing modulation signal are different may mean that duty cycles of the PWM driver gating signals are different, frequencies of the PWM driver gating signals are different, and/or resolutions of the PWM driver gating signals are different.

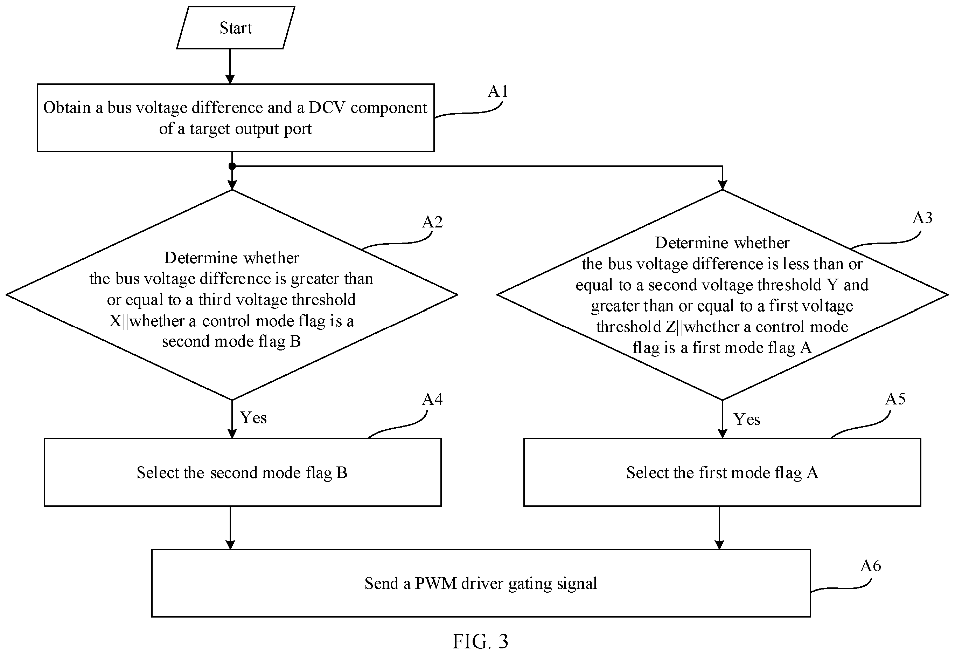

In this embodiment of this application, the control circuit 03 may output the corresponding balancing modulation signal to the balancing bridge arm 01 based on a value of the bus voltage difference, and also output the corresponding balancing modulation signal to the balancing bridge arm 01 based on the current control mode flag. Therefore, flexibility is better. Correspondingly, as shown in FIG. 3, the control circuit 03 may be configured to perform the following steps:
Step A1: After the control circuit 03 starts to operate, obtain the bus voltage difference and the DCV component of the target output port.
Step A2: Determine whether the bus voltage difference is greater than or equal to the third voltage threshold X, or (identified by "∥" in the figure) whether the control mode flag is the second mode flag B.
Step A3: Determine whether the bus voltage difference is less than or equal to the second voltage threshold Y and greater than or equal to the first voltage threshold Z, or whether the control mode flag is the first mode flag A.
Step A4: If the condition in step A2 is met, select the second mode flag B, and correspondingly output the second balancing modulation signal by executing the processing logic of the second mode flag B, that is, perform sending of a PWM driver gating signal in step A6.
Step A5: If the condition in step A3 is met, select the first mode flag A, and correspondingly output the first balancing modulation signal by executing the processing logic of the first mode flag A, that is, perform sending of a PWM driver gating signal in step A6.

It may be understood that, in some embodiments, if the control circuit 03 determines the bus voltage difference in step A2, the control circuit 03 may further first set (for example, adjust) the control mode flag to the second mode flag B in step A4. Then, the control circuit 03 executes the processing logic of the second mode flag B (in other words, selects the second mode flag B), to output the second balancing modulation signal to the balancing bridge arm 01.

Similarly, if the control circuit 03 determines the bus voltage difference in step A3, the control circuit 03 may further first set (for example, adjust) the control mode flag to the first mode flag A in step A5. Then, the control circuit 03 may execute the processing logic of the first mode flag A (in other words, select the first mode flag A), to output the first balancing modulation signal to the balancing bridge arm 01.

Optionally, the control mode flag may alternatively not need to be set in the control circuit 03. In addition, the control circuit 03 may further directly output the second balancing modulation signal to the balancing bridge arm 01 based on the fact that the bus voltage difference is greater than the second voltage threshold Y and less than the third voltage threshold X. In other words, the control circuit 03 may continuously output the second balancing modulation signal to the balancing bridge arm 01 until the bus voltage difference is less than the second voltage threshold Y.

Optionally, it can still be learned with reference to FIG. 2 that the balancing bridge arm 01 may include two first switching transistors T11 and T12.

The two first switching transistors T11 and T12 may be connected in series between the positive bus BUS+ and the negative bus BUS-, and a series connection node of the two first switching transistors T11 and T12 may be connected to the first inductor L1. For example, the series connection node of the two first switching transistors T11 and T12 may be connected to one end of the first inductor L1, and the other end of the first inductor L1 may be connected to the bus midpoint N.

It may be understood that the control circuit 03 may be connected to gates of the two first switching transistors T11 and T12.

Optionally, it can still be learned with reference to FIG. 2 that the switching bridge arm 02 may have the two outputs U and W. Correspondingly, the inverter 00 may have the pair of output ports UO formed by the output U and the bus midpoint N, and the other pair of output ports WO formed by the output W and the bus midpoint N. That is, the inverter 00 may have the two pairs of output ports UO and WO. The inverter 00 of this structure may be a single-phase inverter. In addition, on this basis, the switching bridge arm 02 may include two second switching transistors T21 and T22, two third switching transistors T31 and T32, and two fourth switching transistors T41 and T42.

The two second switching transistors T21 and T22 may be connected in series between the positive bus BUS+ and the negative bus BUS-, and a series connection node of the two second switching transistors T21 and T22 may correspond to one of the two outputs U and W, for example, the output U.

The two third switching transistors T31 and T32 may be connected in series between the positive bus BUS+ and the negative bus BUS-, and a series connection node of the two third switching transistors T31 and T32 corresponds to the other one of the two outputs U and W, for example, the output W.

The two fourth switching transistors T41 and T42 may be connected in series between the two outputs U and W.

Certainly, in some embodiments, the switching bridge arm 02 may alternatively have three or more outputs. Correspondingly, the inverter 00 may also have three or more pairs of output ports. In other words, the inverter 00 is not limited to the single-phase inverter described in this embodiment of this application. In addition, FIG. 2 merely shows an example of a structure of the balancing bridge arm 01 and the switching bridge arm 02.

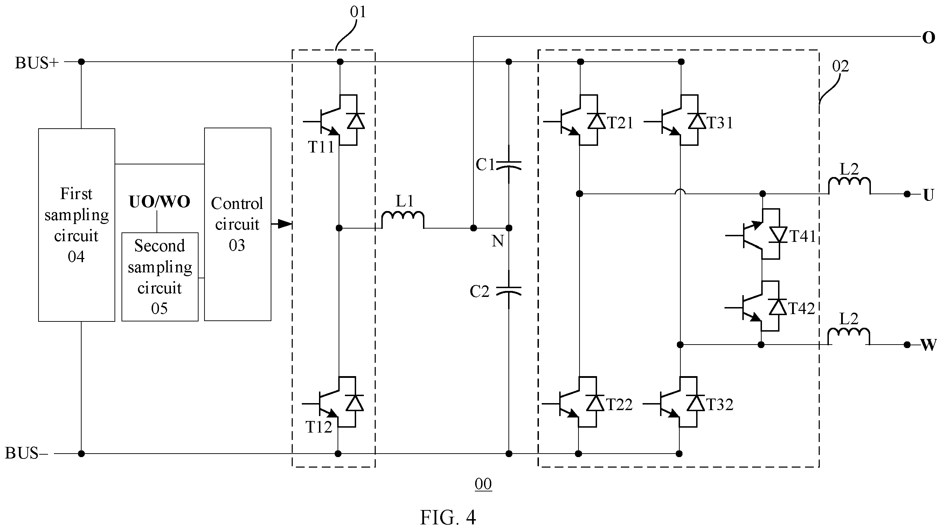

Optionally, FIG. 4 is a schematic of a structure of another inverter according to an embodiment of this application. As shown in FIG. 4, the control circuit 03 may further include a first sampling circuit 04 and a second sampling circuit 05.

The first sampling circuit 04 may be connected to the positive bus BUS+, the negative bus BUS-, and the control circuit 03.

The second sampling circuit 05 may be connected to the target output port (for example, the pair of output ports UO or the pair of output ports WO) and the control circuit 03.

The first sampling circuit 04 may be configured to collect the bus voltage difference.

The second sampling circuit 05 may be configured to collect the DCV component of the target output port.

The control circuit 03 may be configured to: obtain the bus voltage difference through the first sampling circuit 04, and obtain the DCV component of the target output port through the second sampling circuit 05.

Optionally, in this embodiment of this application, the first sampling circuit 04 and the second sampling circuit 05 each may include at least one sampling resistor.

Optionally, in this embodiment of this application, the control circuit 03 may include a digital signal processing (digital signal processing, DSP) chip.

Optionally, it can still be learned with reference to FIG. 2 and FIG. 4 that the inverter 00 described in this embodiment of this application may further include a plurality of second inductors L2 that are in one-to-one correspondence with the plurality of outputs of the switching bridge arm 02. Each of the plurality of second inductors L2 may be connected to one corresponding output. In addition, the second inductors L2 and the first inductor L1 described above may be all coupling inductors, and may be all configured to filter signals.

For example, with reference to FIG. 2 and FIG. 4, on a premise that the inverter 00 includes the two outputs U and W, the inverter 00 may further include a second inductor L2 connected to the output U, and the other second inductor L2 connected to the output W. That is, the inverter 00 may include two second inductors L2.

It may be understood that, in this embodiment of this application, the inverter 00 may include an inverter-side component and a balance-side component. In addition, with reference to FIG. 2 and FIG. 4, the two capacitors C1 and C2, the switching bridge arm 02, and the plurality of second inductors L2 in the inverter 00 may be inverter-side components. The balancing bridge arm 01 and the first inductor L1 in the inverter 00 may be balance-side components.

In some embodiments, for the second inductor L2 in the inverter-side components, it is further considered that the coupling inductor is replaced with a discrete inductor, to directly adjust the DCV component of the target output port through the inverter-side components, so as to balance the voltages on the positive and negative buses. However, in comparison with the coupling inductor, hardware costs of the discrete inductor are high, and this is not conducive to mass production of the inverter. It can be learned that the control circuit 03 outputs the first balancing modulation signal to the balancing bridge arm 01 to adjust the DCV component of the target output port, so that use of the inductor is more flexible. For example, the discrete inductor with the high costs may not need to be disposed in the inverter. Correspondingly, hardware costs of the inverter can be reduced, and this facilitates mass production of the inverter.

In conclusion, this embodiment of the present disclosure provides the inverter. The inverter has the plurality of pairs of output ports, and the inverter includes the balancing bridge arm, the switching bridge arm, the two capacitors, the first inductor, and the control circuit. The two capacitors are connected in series between the positive and negative buses, and each pair of output ports is connected to the series connection node (namely, the bus midpoint) of the two capacitors. The control circuit can obtain the DCV component of the target output port in the plurality of pairs of output ports and the bus voltage difference between the positive and negative buses; and when the bus voltage difference is greater than or equal to the first voltage threshold and less than or equal to the second voltage threshold, can output the balancing modulation signal to the balancing bridge arm, to control the balancing bridge arm to reduce the DCV component of the target output port to the target range by adjusting the current flowing through the first inductor, so that the bus voltage difference is reduced to be less than the first voltage threshold. In other words, the bus voltage difference can be reduced, so that the voltages on the positive and negative buses can be balanced.

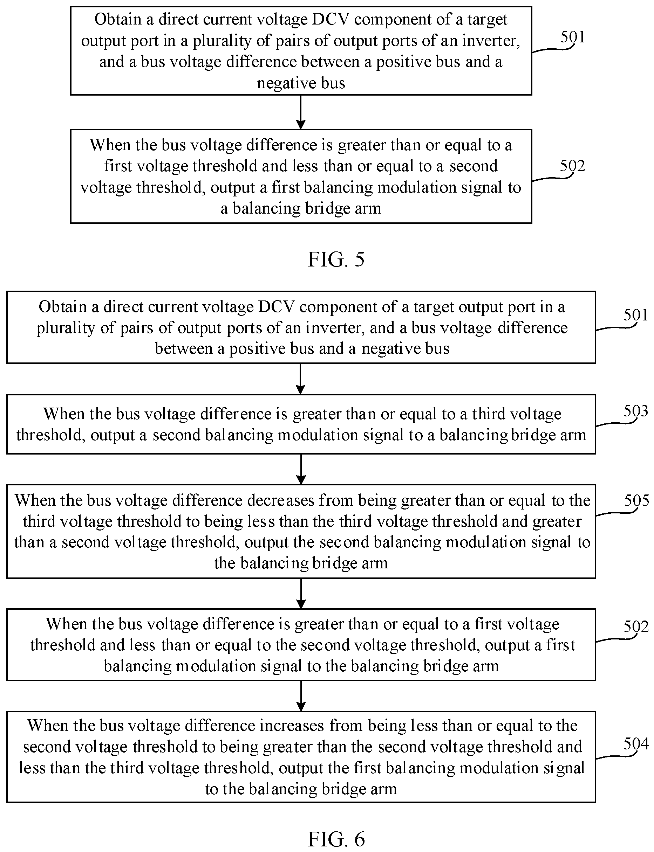

An embodiment of this application further provides a voltage control method for an inverter. As shown in FIG. 2 or FIG. 4, the inverter 00 has a plurality of pairs of output ports (for example, pairs of output ports UO and WO), and the inverter 00 includes a balancing bridge arm 01, a switching bridge arm 02, two capacitors C1 and C2, and a first inductor L1. The two capacitors C1 and C2 are connected in series between a positive bus BUS+ and a negative bus BUS-, a series connection node between the two capacitors C1 and C2 is a bus midpoint N, and the positive bus BUS+ and the negative bus BUS- are configured to connect to a direct current power supply device 10. The balancing bridge arm 01 is connected to the positive bus BUS+ and the negative bus BUS-, and is connected to the bus midpoint N through the first inductor L1. The switching bridge arm 02 is connected to the positive bus BUS+ and the negative bus BUS-, the switching bridge arm 02 has a plurality of outputs (for example, two outputs U and W), and each of the plurality of outputs and the bus midpoint N form one pair of output ports. Therefore, the plurality of outputs and the bus midpoint N can form the plurality of pairs of output ports. The method can be applied to a control circuit 03 included in the inverter 00. As shown in FIG. 5, the method includes the following steps.

Step 501: Obtain a direct current voltage DCV component of a target output port in the plurality of pairs of output ports of the inverter, and a bus voltage difference between the positive bus and the negative bus.

Optionally, as shown in FIG. 4, the control circuit 03 may include a first sampling circuit 04 and a second sampling circuit 05. The control circuit 03 may obtain the DCV component of the target output port through the first sampling circuit 04, and may obtain the bus voltage difference through the second sampling circuit 05.

Step 502: When the bus voltage difference is greater than or equal to a first voltage threshold and less than or equal to a second voltage threshold, output a first balancing modulation signal to the balancing bridge arm.

The first balancing modulation signal is used to control the balancing bridge arm 01 to adjust a current flowing through the first inductor L1, to reduce the DCV component of the target output port to a target range, so that the bus voltage difference is less than the first voltage threshold, and voltages on positive and negative buses are balanced.

FIG. 6 is a flowchart of another voltage control method for an inverter according to the invention. As shown in FIG. 6, the voltage control method includes the following step.

Step 503: When the bus voltage difference is greater than or equal to a third voltage threshold, output a second balancing modulation signal to the balancing bridge arm.

The second balancing modulation signal may be used to control the balancing bridge arm to adjust the current flowing through the first inductor L1, to reduce the bus voltage difference. For example, the bus voltage difference is reduced to be less than the third voltage threshold. In addition, the third voltage threshold may be greater than the second voltage threshold.

With reference to FIG. 6 the voltage control method further includes the following steps.

Step 504: When the bus voltage difference increases from being less than or equal to the second voltage threshold to being greater than the second voltage threshold and less than the third voltage threshold, output the first balancing modulation signal to the balancing bridge arm.

In other words, after the control circuit 03 outputs the first balancing modulation signal to the balancing bridge arm 01, if the bus voltage difference changes to be greater than the second voltage threshold and less than the third voltage threshold, the control circuit 03 may continue to output the first balancing modulation signal to the balancing bridge arm 01, to balance the voltages on the positive and negative buses.

Step 505: When the bus voltage difference decreases from being greater than or equal to the third voltage threshold to being less than the third voltage threshold and greater than the second voltage threshold, output the second balancing modulation signal to the balancing bridge arm.

In other words, after the control circuit 03 outputs the second balancing modulation signal to the balancing bridge arm 01, if the bus voltage difference changes to be greater than the second voltage threshold and less than the third voltage threshold, the control circuit 03 may continue to output the second balancing modulation signal to the balancing bridge arm 01, to balance the voltages on the positive and negative buses.

With reference to FIG. 6, if the bus voltage difference is greater than or equal to the third voltage threshold, the control circuit 03 first performs step 503 after performing step 501, to be specific, first output the second balancing modulation signal to the balancing bridge arm 01, to control the balancing bridge arm 01 to directly reduce the bus voltage difference to be less than the third voltage threshold, in other words, first coarsely adjust the bus voltage difference to balance the voltages on the positive and negative buses. Then, if the bus voltage difference is still less than or equal to the second voltage threshold Y and greater than or equal to the first voltage threshold Z, the control circuit 03 further performs step 502, to be specific, further output the first balancing modulation signal to the balancing bridge arm 01, to control the balancing bridge arm 01 to reduce the DCV component of the target output port, so that the bus voltage difference can be further less than the smaller first voltage threshold Z, in other words, finely adjust the DCV component of the target output port to further balance the voltages on the positive and negative buses.

In addition, with reference to FIG. 6, after performing step 503, to be specific, after outputting the second balancing modulation signal to the balancing bridge arm 01, if the bus voltage difference is greater than the second voltage threshold and less than the third voltage threshold, the control circuit 03 to perform step 505, to be specific, continues to output the second balancing modulation signal to the balancing bridge arm 01. After performing step 502, to be specific, after outputting the first balancing modulation signal to the balancing bridge arm 01, if the bus voltage difference is greater than the second voltage threshold and less than the third voltage threshold, the control circuit 03 continues to perform step 504, to be specific, continues to output the first balancing modulation signal to the balancing bridge arm 01.

It may be further understood that, because the voltage control method for an inverter has basically same implementations and technical effect as the inverter described in the foregoing embodiment, for brevity, implementations and technical effect of the voltage control method for an inverter are not repeatedly described herein.

In embodiments of this application, terms "first", "second", and "third" are merely used for description, but cannot be understood as indications or implications of relative importance. The term "at least one" means one or more, and "a plurality of" means two or more.

The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

## Claims

1. An inverter (00), wherein the inverter (00) has a plurality of pairs of output ports, and the inverter comprises a balancing bridge arm (01), a switching bridge arm (02), two capacitors (C1, C2), a first inductor (L1), and a control circuit (03);
the two capacitors (C1, C2) are connected in series between a positive bus and a negative bus, a series connection node (N) between the two capacitors (C1, C2) is a bus midpoint, and the positive bus and the negative bus are configured to connect to a direct current power supply device;
the balancing bridge arm (01) is connected to the positive bus and the negative bus, and is connected to the bus midpoint through the first inductor (L1);
the switching bridge arm (02) is connected to the positive bus and the negative bus, the switching bridge arm (02) has a plurality of outputs, and each of the plurality of outputs and the bus midpoint form one pair of output ports; and
the control circuit (03) is configured to obtain a bus voltage difference between the positive bus and the negative bus;
**characterized in that** the control circuit (03) is configured to:
obtain a direct current voltage DCV component of a target output port in the plurality of pairs of output ports; and
when the bus voltage difference is greater than or equal to a first voltage threshold and less than or equal to a second voltage threshold, output a first balancing modulation signal to the balancing bridge arm (01), wherein the first balancing modulation signal is used to control the balancing bridge arm (01) to adjust a current flowing through the first inductor (L1), to reduce the DCV component of the target output port to a target range;
when the bus voltage difference is greater than or equal to a third voltage threshold, output a second balancing modulation signal to the balancing bridge arm (01), wherein the second balancing modulation signal is used to control the balancing bridge arm (01) to adjust the current flowing through the first inductor (L1), to reduce the bus voltage difference, wherein the third voltage threshold is greater than the second voltage threshold; and
when the bus voltage difference increases from being less than or equal to the second voltage threshold to being greater than the second voltage threshold and less than the third voltage threshold, output the first balancing modulation signal to the balancing bridge arm (01); and
when the bus voltage difference decreases from being greater than or equal to the third voltage threshold to being less than the third voltage threshold and greater than the second voltage threshold, output the second balancing modulation signal to the balancing bridge arm (01).

2. The inverter (00) according to claim 1, wherein the balancing bridge arm (01) comprises two first switching transistors (T11, T12); and
the two first switching transistors (T11, T12) are connected in series between the positive bus and the negative bus, and a series connection node of the two first switching transistors (T11, T12) is connected to the first inductor (L1).

3. The inverter (00) according to any one of claims 1 or 2, wherein the switching bridge arm (02) has two outputs, and the switching bridge arm (02) comprises two second switching transistors (T21, T22), two third switching transistors (T31, T32), and two fourth switching transistors (T41, T42);
the two second switching transistors (T21, T22) are connected in series between the positive bus and the negative bus, and a series connection node of the two second switching transistors (T21, T22) corresponds to one of the two outputs;
the two third switching transistors (T31, T32) are connected in series between the positive bus and the negative bus, and a series connection node of the two third switching transistors (T31, T32) corresponds to the other one of the two outputs; and
the two fourth switching transistors (T41, T42) are connected in series between the two outputs.

4. The inverter (00) according to any one of claims 1 to 3, wherein the inverter (00) further comprises a first sampling circuit and a second sampling circuit;
the first sampling circuit is connected to the positive bus, the negative bus, and the control circuit;
the second sampling circuit is connected to the target output port and the control circuit;
the first sampling circuit is configured to collect the bus voltage difference;
the second sampling circuit is configured to collect the DCV component of the target output port; and
the control circuit is configured to: obtain the bus voltage difference through the first sampling circuit, and obtain the DCV component of the target output port through the second sampling circuit.

5. The inverter (00) according to claim 4, wherein the first sampling circuit and the second sampling circuit each comprise at least one sampling resistor.

6. The inverter (00) according to any one of claims 1 to 5, wherein the inverter (00) further comprises a plurality of second inductors (L2) that are in one-to-one correspondence with the plurality of outputs of the switching bridge arm (02);
each of the plurality of second inductors (L2) is connected to one corresponding output; and
the second inductors (L2) and the first inductor (L1) are all coupling inductors.

7. A voltage control method for an inverter (00), wherein the inverter (00) has a plurality of pairs of output ports, and the inverter comprises a balancing bridge arm (01), a switching bridge arm, two capacitors (C1, C2), and a first inductor (L1);
the two capacitors (C1, C2) are connected in series between a positive bus and a negative bus, a series connection node (N) between the two capacitors is a bus midpoint, and the positive bus and the negative bus are configured to connect to a direct current power supply device;
the balancing bridge arm (01) is connected to the positive bus and the negative bus, and is connected to the bus midpoint through the first inductor (L1);
the switching bridge arm (02) is connected to the positive bus and the negative bus, the switching bridge arm (02) has a plurality of outputs, and each of the plurality of outputs and the bus midpoint form one pair of output ports; and
the method comprises:
obtaining a direct current voltage DCV component of a target output port in the plurality of pairs of output ports of the inverter (00), and a bus voltage difference between the positive bus and the negative bus; and
when the bus voltage difference is greater than or equal to a first voltage threshold and less than or equal to a second voltage threshold, outputting a first balancing modulation signal to the balancing bridge arm (01), wherein the first balancing modulation signal is used to control the balancing bridge arm (01) to adjust a current flowing through the first inductor (L1), to reduce the DCV component of the target output port to a target range;
when the bus voltage difference is greater than or equal to a third voltage threshold, outputting a second balancing modulation signal to the balancing bridge arm (01), wherein the second balancing modulation signal is used to control the balancing bridge arm (01) to adjust the current flowing through the first inductor (L1), to reduce the bus voltage difference, wherein the third voltage threshold is greater than the second voltage threshold; and
when the bus voltage difference increases from being less than or equal to the second voltage threshold to being greater than the second voltage threshold and less than the third voltage threshold, outputting the first balancing modulation signal to the balancing bridge arm (01); and
when the bus voltage difference decreases from being greater than or equal to the third voltage threshold to being less than the third voltage threshold and greater than the second voltage threshold, outputting the second balancing modulation signal to the balancing bridge arm (01).

## Patentansprüche

1. Wechselrichter (00), wobei der Wechselrichter (00) mehrere Paare von Ausgangsanschlüssen aufweist und der Wechselrichter einen Ausgleichsbrückenarm (01), einen Schaltbrückenarm (02), zwei Kondensatoren (C1, C2), eine erste Induktivität (L1) und eine Steuerschaltung (03) umfasst;
die zwei Kondensatoren (C1, C2) zwischen einem positiven Bus und einem negativen Bus in Reihe geschaltet sind, ein Reihenschaltungsknoten (N) zwischen den zwei Kondensatoren (C1, C2) ein Busmittelpunkt ist und der positive Bus und der negative Bus zur Verbindung mit einer Gleichstromversorgungsvorrichtung ausgelegt sind;
der Ausgleichsbrückenarm (01) mit dem positiven Bus und dem negativen Bus verbunden ist und über die erste Induktivität (L1) mit dem Busmittelpunkt verbunden ist;
der Schaltbrückenarm (02) mit dem positiven Bus und dem negativen Bus verbunden ist, der Schaltbrückenarm (02) mehrere Ausgänge aufweist und jeder der mehreren Ausgänge und der Busmittelpunkt ein Paar von Ausgangsanschlüssen bilden; und
die Steuerschaltung (03) dazu ausgelegt ist, eine Busspannungsdifferenz zwischen dem positiven Bus und dem negativen Bus zu erhalten;
**dadurch gekennzeichnet, dass** die Steuerschaltung (03) zu Folgendem ausgelegt ist:
Erhalten einer Gleichspannungs- bzw. DCV-Komponente eines Zielausgangsanschlusses in den mehreren Paaren von Ausgangsanschlüssen; und
wenn die Busspannungsdifferenz größer oder gleich einer ersten Spannungsschwelle und kleiner oder gleich einer zweiten Spannungsschwelle ist, Ausgeben eines ersten Ausgleichsmodulationssignals an den Ausgleichsbrückenarm (01), wobei das erste Ausgleichsmodulationssignal verwendet wird, um den Ausgleichsbrückenarm (01) dazu zu steuern, einen durch die erste Induktivität (L1) fließenden Strom anzupassen, um die DCV-Komponente des Zielausgangsanschlusses auf einen Zielbereich zu reduzieren;
wenn die Busspannungsdifferenz größer oder gleich einer dritten Spannungsschwelle ist, Ausgeben eines zweiten Ausgleichsmodulationssignals an den Ausgleichsbrückenarm (01), wobei das zweite Ausgleichsmodulationssignal verwendet wird, um den Ausgleichsbrückenarm (01) dazu zu steuern, den durch die erste Induktivität (L1) fließenden Strom anzupassen, um die Busspannungsdifferenz zu reduzieren, wobei die dritte Spannungsschwelle größer als die zweite Spannungsschwelle ist; und
wenn die Busspannungsdifferenz von kleiner oder gleich der zweiten Spannungsschwelle zu größer als die zweite Spannungsschwelle und kleiner als die dritte Spannungsschwelle zunimmt, Ausgeben des ersten Ausgleichsmodulationssignals an den Ausgleichsbrückenarm (01); und
wenn die Busspannungsdifferenz von größer oder gleich der dritten Spannungsschwelle auf kleiner als die dritte Spannungsschwelle und größer als die zweite Spannungsschwelle abnimmt, Ausgeben des zweiten Ausgleichsmodulationssignals an den Ausgleichsbrückenarm (01).

2. Wechselrichter (00) nach Anspruch 1, wobei der Ausgleichsbrückenarm (01) zwei erste Schalttransistoren (T11, T12) umfasst; und
die zwei ersten Schalttransistoren (T11, T12) zwischen dem positiven Bus und dem negativen Bus in Reihe geschaltet sind und ein Reihenschaltungsknoten der zwei ersten Schalttransistoren (T11, T12) mit der ersten Induktivität (L1) verbunden ist.

3. Wechselrichter (00) nach einem der Ansprüche 1 oder 2, wobei der Schaltbrückenarm (02) zwei Ausgänge aufweist und der Schaltbrückenarm (02) zwei zweite Schalttransistoren (T21, T22), zwei dritte Schalttransistoren (T31, T32) und zwei vierte Schalttransistoren (T41, T42) umfasst;
die zwei zweiten Schalttransistoren (T21, T22) zwischen dem positiven Bus und dem negativen Bus in Reihe geschaltet sind und ein Reihenschaltungsknoten der zwei zweiten Schalttransistoren (T21, T22) einem der zwei Ausgänge entspricht;
die zwei dritten Schalttransistoren (T31, T32) zwischen dem positiven Bus und dem negativen Bus in Reihe geschaltet sind und ein Reihenschaltungsknoten der zwei dritten Schalttransistoren (T31, T32) dem anderen der zwei Ausgänge entspricht; und
die zwei vierten Schalttransistoren (T41, T42) zwischen den zwei Ausgängen in Reihe geschaltet sind.

4. Wechselrichter (00) nach einem der Ansprüche 1 bis 3, wobei der Wechselrichter (00) ferner eine erste Abtastschaltung und eine zweite Abtastschaltung umfasst;
die erste Abtastschaltung mit dem positiven Bus, dem negativen Bus und der Steuerschaltung verbunden ist;
die zweite Abtastschaltung mit dem Zielausgangsanschluss und der Steuerschaltung verbunden ist;
die erste Abtastschaltung dazu ausgelegt ist, die Busspannungsdifferenz zu erfassen;
die zweite Abtastschaltung dazu ausgelegt ist, die DCV-Komponente des Zielausgangsanschlusses zu erfassen; und
die Steuerschaltung zu Folgendem ausgelegt ist: Erhalten der Busspannungsdifferenz über die erste Abtastschaltung und Erhalten der DCV-Komponente des Zielausgangsanschlusses über die zweite Abtastschaltung.

5. Wechselrichter (00) nach Anspruch 4, wobei die erste Abtastschaltung und die zweite Abtastschaltung jeweils mindestens einen Abtastwiderstand umfassen.

6. Wechselrichter (00) nach einem der Ansprüche 1 bis 5, wobei der Wechselrichter (00) ferner mehrere zweite Induktivitäten (L2) umfasst, die den mehreren Ausgängen des Schaltbrückenarms (02) eineindeutig entsprechen;
jede der mehreren zweiten Induktivitäten (L2) mit einem entsprechenden Ausgang verbunden ist; und
die zweiten Induktivitäten (L2) und die erste Induktivität (L1) alle Koppelinduktivitäten sind.

7. Spannungssteuerverfahren für einen Wechselrichter (00), wobei der Wechselrichter (00) mehrere Paare von Ausgangsanschlüssen aufweist und der Wechselrichter einen Ausgleichsbrückenarm (01), einen Schaltbrückenarm, zwei Kondensatoren (C1, C2) und eine erste Induktivität (L1) umfasst;
die zwei Kondensatoren (C1, C2) zwischen einem positiven Bus und einem negativen Bus in Reihe geschaltet sind, ein Reihenschaltungsknoten (N) zwischen den zwei Kondensatoren ein Busmittelpunkt ist und der positive Bus und der negative Bus zur Verbindung mit einer Gleichstromversorgungsvorrichtung ausgelegt sind;
der Ausgleichsbrückenarm (01) mit dem positiven Bus und dem negativen Bus verbunden ist und über die erste Induktivität (L1) mit dem Busmittelpunkt verbunden ist;
der Schaltbrückenarm (02) mit dem positiven Bus und dem negativen Bus verbunden ist, der Schaltbrückenarm (02) mehrere Ausgänge aufweist und jeder der mehreren Ausgänge und der Busmittelpunkt ein Paar von Ausgangsanschlüssen bilden; und
wobei das Verfahren Folgendes umfasst:
Erhalten einer Gleichspannungs- bzw. DCV-Komponente eines Zielausgangsanschlusses in den mehreren Paaren von Ausgangsanschlüssen des Wechselrichters (00) und einer Busspannungsdifferenz zwischen dem positiven Bus und dem negativen Bus; und
wenn die Busspannungsdifferenz größer oder gleich einer ersten Spannungsschwelle und kleiner oder gleich einer zweiten Spannungsschwelle ist, Ausgeben eines ersten Ausgleichsmodulationssignals an den Ausgleichsbrückenarm (01), wobei das erste Ausgleichsmodulationssignal verwendet wird, um den Ausgleichsbrückenarm (01) dazu zu steuern, einen durch die erste Induktivität (L1) fließenden Strom anzupassen, um die DCV-Komponente des Zielausgangsanschlusses auf einen Zielbereich zu reduzieren;
wenn die Busspannungsdifferenz größer oder gleich einer dritten Spannungsschwelle ist, Ausgeben eines zweiten Ausgleichsmodulationssignals an den Ausgleichsbrückenarm (01), wobei das zweite Ausgleichsmodulationssignal verwendet wird, um den Ausgleichsbrückenarm (01) dazu zu steuern, den durch die erste Induktivität (L1) fließenden Strom anzupassen, um die Busspannungsdifferenz zu reduzieren, wobei die dritte Spannungsschwelle größer als die zweite Spannungsschwelle ist; und
wenn die Busspannungsdifferenz von kleiner oder gleich der zweiten Spannungsschwelle zu größer als die zweite Spannungsschwelle und kleiner als die dritte Spannungsschwelle zunimmt, Ausgeben des ersten Ausgleichsmodulationssignals an den Ausgleichsbrückenarm (01); und
wenn die Busspannungsdifferenz von größer oder gleich der dritten Spannungsschwelle auf kleiner als die dritte Spannungsschwelle und größer als die zweite Spannungsschwelle abnimmt, Ausgeben des zweiten Ausgleichsmodulationssignals an den Ausgleichsbrückenarm (01).

## Revendications

1. Onduleur (00), l'onduleur (00) ayant une pluralité de paires de ports de sortie, et l'onduleur comprenant un bras de pont d'équilibrage (01), un bras de pont de commutation (02), deux condensateurs (C1, C2), une première inductance (L1) et un circuit de commande (03) ;
les deux condensateurs (C1, C2) étant connectés en série entre un bus positif et un bus négatif, un nœud de connexion en série (N) entre les deux condensateurs (C1, C2) étant un point médian de bus, et le bus positif et le bus négatif étant configurés pour se connecter à un dispositif d'alimentation à courant continu ;
le bras de pont d'équilibrage (01) étant connecté au bus positif et au bus négatif, et étant connecté au point médian de bus à travers la première inductance (L1) ;
le bras de pont de commutation (02) étant connecté au bus positif et au bus négatif, le bras de pont de commutation (02) ayant une pluralité de sorties, et chacune de la pluralité de sorties et le point médian de bus formant une paire de ports de sortie ; et
le circuit de commande (03) étant configuré pour obtenir une différence de tension de bus entre le bus positif et le bus négatif ;
**caractérisé en ce que** le circuit de commande (03) est configuré pour :
obtenir une composante de tension continue DCV d'un port de sortie cible dans la pluralité de paires de ports de sortie ; et
lorsque la différence de tension de bus est supérieure ou égale à un premier seuil de tension et inférieure ou égale à un deuxième seuil de tension, émettre en sortie un premier signal de modulation d'équilibrage vers le bras de pont d'équilibrage (01), le premier signal de modulation d'équilibrage étant utilisé pour commander le bras de pont d'équilibrage (01) afin d'ajuster un courant traversant la première inductance (L1), afin de réduire la composante DCV du port de sortie cible à une plage cible ;
lorsque la différence de tension de bus est supérieure ou égale à un troisième seuil de tension, émettre en sortie un deuxième signal de modulation d'équilibrage vers le bras de pont d'équilibrage (01), le deuxième signal de modulation d'équilibrage étant utilisé pour commander le bras de pont d'équilibrage (01) afin d'ajuster le courant traversant la première inductance (L1), afin de réduire la différence de tension de bus, le troisième seuil de tension étant supérieur au deuxième seuil de tension ; et
lorsque la différence de tension de bus augmente d'inférieure ou égale au deuxième seuil de tension jusqu'à être supérieure au deuxième seuil de tension et inférieure au troisième seuil de tension, émettre en sortie le premier signal de modulation d'équilibrage vers le bras de pont d'équilibrage (01) ; et
lorsque la différence de tension de bus diminue de supérieure ou égale au troisième seuil de tension jusqu'à être inférieure au troisième seuil de tension et supérieure au deuxième seuil de tension, émettre en sortie le deuxième signal de modulation d'équilibrage vers le bras de pont d'équilibrage (01).

2. Onduleur (00) selon la revendication 1, le bras de pont d'équilibrage (01) comprenant deux premiers transistors de commutation (T11, T12) ; et
les deux premiers transistors de commutation (T11, T12) étant connectés en série entre le bus positif et le bus négatif, et un nœud de connexion en série des deux premiers transistors de commutation (T11, T12) étant connecté à la première inductance (L1).

3. Onduleur (00) selon l'une quelconque des revendications 1 ou 2, le bras de pont de commutation (02) ayant deux sorties, et le bras de pont de commutation (02) comprenant deux deuxièmes transistors de commutation (T21, T22), deux troisièmes transistors de commutation (T31, T32) et deux quatrièmes transistors de commutation (T41, T42) ;
les deux deuxièmes transistors de commutation (T21, T22) étant connectés en série entre le bus positif et le bus négatif, et un nœud de connexion en série des deux deuxièmes transistors de commutation (T21, T22) correspondant à l'une des deux sorties,
les deux troisièmes transistors de commutation (T31, T32) étant connectés en série entre le bus positif et le bus négatif, et un nœud de connexion en série des deux troisièmes transistors de commutation (T31, T32) correspondant à l'autre des deux sorties ; et
les deux quatrièmes transistors de commutation (T41, T42) étant connectés en série entre les deux sorties.

4. Onduleur (00) selon l'une quelconque des revendications 1 à 3, l'onduleur (00) comprenant en outre un premier circuit d'échantillonnage et un deuxième circuit d'échantillonnage ;
le premier circuit d'échantillonnage étant connecté au bus positif, au bus négatif, et au circuit de commande ;
le deuxième circuit d'échantillonnage étant connecté au port de sortie cible et au circuit de commande,
le premier circuit d'échantillonnage étant configuré pour collecter la différence de tension de bus ;
le deuxième circuit d'échantillonnage étant configuré pour collecter la composante DCV du port de sortie cible ; et
le circuit de commande étant configuré pour : obtenir la différence de tension de bus à travers le premier circuit d'échantillonnage, et obtenir la composante DCV du port de sortie cible à travers le deuxième circuit d'échantillonnage.

5. Onduleur (00) selon la revendication 4, le premier circuit d'échantillonnage et le deuxième circuit d'échantillonnage comprenant chacun au moins une résistance d'échantillonnage.

6. Onduleur (00) selon l'une quelconque des revendications 1 à 5, l'onduleur (00) comprenant en outre une pluralité de deuxièmes inductances (L2) qui sont en correspondance biunivoque avec la pluralité de sorties du bras de pont de commutation (02) ;
chacune de la pluralité de deuxièmes inductances (L2) étant connectée à une sortie correspondante ; et
les deuxièmes inductances (L2) et la première inductance (L1) étant toutes des inductances de couplage.

7. Procédé de commande de tension pour un onduleur (00), l'onduleur (00) comportant une pluralité de paires de ports de sortie, et l'onduleur comprenant un bras de pont d'équilibrage (01), un bras de pont de commutation, deux condensateurs (C1, C2) et une première inductance (L1) ;
les deux condensateurs (C1, C2) étant connectés en série entre un bus positif et un bus négatif, un nœud de connexion en série (N) entre les deux condensateurs étant un point médian de bus, et le bus positif et le bus négatif étant configurés pour être connectés à un dispositif d'alimentation en courant continu ;
le bras de pont d'équilibrage (01) étant connecté au bus positif et au bus négatif, et étant connecté au point médian de bus à travers la première inductance (L1) ;
le bras de pont de commutation (02) étant connecté au bus positif et au bus négatif, le bras de pont de commutation (02) ayant une pluralité de sorties, et chacune de la pluralité de sorties et le point médian de bus formant une paire de ports de sortie ; et
le procédé comprenant :
l'obtention d'une composante de tension continue DCV d'un port de sortie cible dans la pluralité de paires de ports de sortie de l'onduleur (00), et d'une différence de tension de bus entre le bus positif et le bus négatif, et
lorsque la différence de tension de bus est supérieure ou égale à un premier seuil de tension et inférieure ou égale à un deuxième seuil de tension, l'émission en sortie d'un premier signal de modulation d'équilibrage vers le bras de pont d'équilibrage (01), le premier signal de modulation d'équilibrage étant utilisé pour commander le bras de pont d'équilibrage (01) afin d'ajuster un courant traversant la première inductance (L1), afin de réduire la composante DCV du port de sortie cible à une plage cible ;
lorsque la différence de tension de bus est supérieure ou égale à un troisième seuil de tension, l'émission en sortie d'un deuxième signal de modulation d'équilibrage vers le bras de pont d'équilibrage (01), le deuxième signal de modulation d'équilibrage étant utilisé pour commander le bras de pont d'équilibrage (01) afin d'ajuster le courant traversant la première inductance (L1), afin de réduire la différence de tension de bus, le troisième seuil de tension étant supérieur au deuxième seuil de tension ; et
lorsque la différence de tension de bus augmente d'inférieure ou égale au deuxième seuil de tension jusqu'à être supérieure au deuxième seuil de tension et inférieure au troisième seuil de tension, l'émission en sortie du premier signal de modulation d'équilibrage vers le bras de pont d'équilibrage (01) ; et
lorsque la différence de tension de bus diminue de supérieure ou égale au troisième seuil de tension jusqu'à être inférieure au troisième seuil de tension et supérieure au deuxième seuil de tension, l'émission en sortie du deuxième signal de modulation d'équilibrage vers le bras de pont d'équilibrage (01).
